# EUROPEAN PATENT SPECIFICATION

(11) **EP 4 248 323 B1**
(45) Date of publication and mention of the grant of the patent: **21.08.2024**
(21) Application number: 21705501.1
(22) Date of filing: 12.02.2021
(51) Int. Cl.: G06F 12/0846, G06F 12/0864, G06F 12/14, G06F 21/79, G06F 21/54, G06F 21/56

(54) **LOW OVERHEAD ACTIVE MITIGATION OF SECURITY VULNERABILITIES BY MEMORY TAGGING**
AKTIVE ABSCHWÄCHUNG VON SICHERHEITSSCHWACHSTELLEN MIT GERINGEM OVERHEAD DURCH SPEICHERMARKIERUNG
ATTÉNUATION ACTIVE À FAIBLE SURDÉBIT DE VULNÉRABILITÉS DE SÉCURITÉ PAR MARQUAGE DE MÉMOIRE

(43) Date of publication of application: 27.09.2023
(73) Proprietor: Huawei Technologies Co., Ltd., Shenzhen, Guangdong 518129 (CN)
(72) Inventor: YANOVER, Igor, 80992 Munich (DE); SADE, Raanan, 80992 Munich (DE); BERGER, Yair, 80992 Munich (DE); ZHOU, Yongbin, 80992 Munich (DE); LI, Shuo, 80992 Munich (DE); FU, Qiang, 80992 Munich (DE); LI, Kai, 80992 Munich (DE); GABOR, Ron, 80992 Munich (DE)
(74) Representative: Epping - Hermann - Fischer
(86) International application number: PCT/EP2021/053510
(87) International publication number: WO 2022/171299

(56) References cited:
- EP-A1- 3 757 855
- EP-A1- 3 757 856
- WO-A1-03/083671
- US-A1- 2010 180 083
- US-A1- 2017 262 382
- US-A1- 2019 377 575
- US-A1- 2020 210 070

## Description

### BACKGROUND

Some embodiments described in the present disclosure relate to a method of mitigating security vulnerabilities and, more specifically, but not exclusively, to a hardware based low overhead active mitigation of security vulnerabilities by memory tagging based on context properties.

Processing units may comprise one or more processor, which may also referred to as execution units or processor cores. A processor may execute a single thread, or execute a plurality of threads substantially simultaneously. Software applications may have a plurality of layers, for example operating systems, software libraries, database applications, and user interfaces. Interpreters, compilers, linkers, and the like may be used to convert software applications to pluralities of contexts, having a plurality of code sequences executable by one or more processors.

The processor memory mapping as accessible from code sequences executable may be complex, and based on different media. For example fast access memory, hardware registers, non volatile memory, dynamic random memory (DRAM), video random memory (VRAM), double data rate synchronous dynamic random-access memory (DDR SDRAM), external memory over cloud, fog, or the internet, and the like. A memory management unit (MMU) may be used for providing interface and converting the memory mapping between the processor memory mapping and the system memory mapping. The memory management unit may comprise registers to store memory access characteristics, for example data and addresses. The memory management unit may further comprise several buffers and pipeline stages. For example the reorder buffer (ROB), and the post-commit pending stores, or the store-combining buffer (SCB). One or more caches may be placed in various locations along the memory path, enabling faster access to already fetched data.

Applications may receive a memory allocation, which is a range of addresses to which the application is permitted to direct memory access. Some applications may share some or all the memory allocations, allocate some of the memory allocated thereto to sub applications they may initiate or communicate therewith, have different allocation for read and write memory accesses, and the like.

Some coding environments and programmable applications have built in methods to enforce the memory allocation. However, some environment, for example, assemblers and programming environment for C and C++, may lack the capability to prevent a pointer from exceeding the allocated memory.

A software, firmware, or the like, which comprise a bug that may lead to memory accesses outside the associated allocated memory. These bugs may be referred to as vulnerabilities, and methods of using these vulnerabilities may be referred to as exploits. A malicious agent may use these vulnerabilities or introduce a code deliberately generating memory accesses outside its allocated memory.

When a vulnerability becomes known to software developers, they may distribute patches fixing the vulnerability, and software quality assurance (QA) may double check code written in programming languages such as C, however such vulnerabilities are still being created.

EP 3 757 856 A1 relates to cryptographic isolation of memory compartments in a computing environment. An example method comprises executing a first instruction of a first software entity to receive a first input operand indicating a first key associated with a first memory compartment of a plurality of memory compartments stored in a first memory unit, and execute a cryptographic algorithm in a core of a processor to compute first encrypted contents based at least in part on the first key. Subsequent to computing the first encrypted contents in the core, the first encrypted contents are stored at a memory location in the first memory compartment of the first memory unit. More specific embodiments include, prior to storing the first encrypted contents at the memory location in the first memory compartment and subsequent to computing the first encrypted contents in the core, moving the first encrypted contents into a level one (L 1) cache outside a boundary of the core.

### SUMMARY

Memory allocation vulnerabilities may be used by many cyber-attacks. The Eternalblue exploit, which was used by WannaCry and NotPetya is an example of an exploit based on gaining access to memory outside the allocated range. The exploit takes advantage of several bugs. One of the bugs accounts for an insufficient memory allocation for a list structure, by causing an integer overflow, leading to a buffer overflow. Therefore, extra data may overflow into adjacent memory space. The heap spraying technique is also based on receiving allocations on memory reserved for other applications, the operating system, or the like.

Hardware may be adapted to provide another layer of security, by providing active mitigation, and providing active mitigation for software security vulnerabilities at low performance overhead is a key for software security. A processor and core intellectual property (IP) provider, developed a memory tagging extension, providing hardware based detection of memory accesses outside the associated allocated memory.

The memory tagging extension provides hardware based detection of applications exceeding their allocated memory, however relies on software to provide the mitigation. This memory tagging extension provides some information for the software developer, but provides active mitigation by hardware only at a high overhead debug mode, having prohibitive performance impact for actual use.

As used herein, memory tagging refers to at least one rule representing memory allocation. The rule may preclude applications, routines, code sequences, and the like of one or more privilege levels (e.g. execution level), from accessing one or more ranges of memory addresses or other resources. The memory address may be associated with different caching levels, and may be a linear address, physical address, a hashed representation, an intermediate address, and/or the like. A rule may also enforce allocation of memory address range for a context, thread, application, and/or the like. The purpose of the memory tagging is protecting other applications data and code from, accidentally or maliciously, being accessed by unauthorized software.

Some implementations of the disclosure provide active hardware mitigation in effective against many attacks and vulnerabilities, at low cost and low software effort, usable in real world applications. Some implementations of the disclosure provide additional log information about occurrences of memory tagging violations, and some implementations may support switching on and off the logging and/or the active mitigation by a user, the operating system, a central control, and/or the likes.

Some implementations of the disclosure may load the allocation-tag-checks are done before retirement from the memory management unit (MMU), mitigation can be done by exception at retirement by the reorder buffer (ROB) with no performance overhead.

Some implementations of the disclosure may check the store allocation tag checks post retirement, rendering the delivery of the exception to the right context difficult to implement. Some implementations of the disclosure may deliver the tag-check exception, when the next load or store from the same context, execution level (EL) and/or the like, retires from the MMU. This may be referred to as a later memory access from the program getting the tag-check exception for an earlier store.

The vulnerability and susceptibility to attacks during this window may be minimized by isolating the store with tag-check failure, which may be referred to as the offending store, therefore guaranteeing it will not affect the execution in the vulnerability window. The vulnerability may be minimized by delaying the writing of a store not completing the tag-check to the cache.

Some processing units may support store to loads forwarding, and some implementations of the disclosure may prevent the forwarding before tag checking.

Some implementations of the disclosure may account for a special architectural state, in which the cache is not updated, however registers of younger instructions are updated. This state may be required for the security isolation of the offending store.

Some implementations of the disclosure may comprise additional modifications to decrease the vulnerability window for stores, by reducing the time, or the memory accesses number between the detection to exception window.

Some implementations may use a set of registered to configure and operate the low overhead active mitigation (LOAM), for example privilege level to enforce the memory allocation rules on, an address of a code sequence used for the mitigation, properties of the offending process, and the like. These registered may be referred to as the LOAM system registers.

Some implementations may impose a limit on a reorder buffer (ROB) run-ahead. Limiting the ROB run-ahead may be configurable though the LOAM system registers.

In some examples, the store dispatch to the cache may be forced to be in-order. More moderate methods of stronger store ordering may impose a limit on the number of write accesses, or memory accesses, allowed to pass a pending write memory access, for example 1, 2, 4, or 7.

Alternatively or additionally, post-commit pending stores aging limit may be implemented to reduce the time between store and the allocation-tag checking.

It should be noted that performance loss may be incurred by stronger ordering, and of course strict ordering, however the stronger ordering may significantly reduce the vulnerability window.

Some implementations of the disclosure may trigger a detection interrupt, for example an asynchronous exception, for stores when Tag check fails, before any following instruction is executed. An interrupt, may synchronized by a special barrier, for example ESB in RAS.

It may be preferred to provide a guarantee on the vulnerability windows size, i.e. the maximum number of instructions, memory accesses, or more specifically store memory accesses, that may be executed during the vulnerability window, simplifying and enhancing the capabilities of software security analysis.

Some implementations may comprise store-handling improvement. These implementations may check all the older stores that have not been checked due to the store weak ordering on detection of an offending store. If an older store is found to be an offending store by checking for allocation-tag, that store will be used as the offending store instead of the younger one that triggered the handling.

Some implementations may comprise enhancing information logging, which may be used to speedup OSV/ISV debug, bucketing, triaging and/or the like.

Benefits of the disclosure comprise effective mitigation of known attacks, as the detected events as delivered as exceptions close to the first occurrence of the vulnerability, thereby minimizing the detection window size. Implementations of the disclosed low overhead active mitigation may be capable of having 100% probability of stopping attacks such as Wannacry and Heartbleed, while effectively mitigating other attacks by leaving a very small window for exploiting the compromised system.

Another benefit is detection of the software vulnerabilities at the correct privilege level, for example EL, and context, and delivering it to the correct privilege and context. Furthermore, implementations of the disclosure may provide more detailed logging information, enabling faster triage and debugging. The logging may be done out of order, at a different privilege levels or EL while context is being switched, however this may be easy to resolve. Some prior art logs a single bit, and logging of more information requires solution to several issues of the imprecise detection.

It is an object of the present disclosure to describe a system and a method for low overhead active mitigation of security vulnerabilities, on processing unit adapted for out of order execution of a plurality of code sequences, and based on storing a respective context identifier for pending memory accesses.

The foregoing and other objects are achieved by the features of the independent claims. Further implementation forms are apparent from the dependent claims, the description and the figures.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which embodiments.

### BRIEF DESCRIPTION OF THE SEVERAL VIEWS OF THE DRAWINGS

Some embodiments are herein described, by way of example only, with reference to the accompanying drawings. With specific reference now to the drawings in detail, it is stressed that the particulars shown are by way of example and for purposes of illustrative discussion of embodiments. In this regard, the description taken with the drawings makes apparent to those skilled in the art how embodiments may be practiced.

In the drawings:
FIG. 1 is a schematic block diagram of an exemplary system with low overhead active mitigation of security vulnerabilities by memory tagging, according to some embodiments;
FIG. 2 is a flowchart schematically representing an optional flow of low overhead active mitigation of security vulnerabilities by memory tagging, according to some embodiments;
FIG. 3 is a pipeline illustration of an exemplary memory access sequence in a system with low overhead active mitigation of security vulnerabilities by memory tagging, according to some embodiments, according to prior art;
FIG. 4 is a pipeline illustration of an exemplary system with low overhead active mitigation of security vulnerabilities by memory tagging, according to prior art;
FIG. 5 is a pipeline illustration of an exemplary system with low overhead active mitigation of security vulnerabilities by memory tagging, according to some embodiments; and
FIG. 6 is a table of an exemplary register set for a system with low overhead active mitigation of security vulnerabilities by memory tagging, according to some embodiments.

### DETAILED DESCRIPTION

Some embodiments described in the present disclosure relate to a method of mitigating security vulnerabilities and, more specifically, but not exclusively, to a hardware based low overhead active mitigation of security vulnerabilities by memory tagging based on context properties.

Before explaining at least one embodiment in detail, it is to be understood that embodiments are not necessarily limited in its application to the details of construction and the arrangement of the components and/or methods set forth in the following description and/or illustrated in the drawings and/or the Examples. Implementations described herein are capable of other embodiments or of being practiced or carried out in various ways.

Embodiments may be a system, a method, and/or a computer program product. The computer program product may include a computer readable storage medium (or media) having computer readable program instructions thereon for causing a processor to carry out aspects of the embodiments.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of embodiments may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of embodiments.

Aspects of embodiments are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

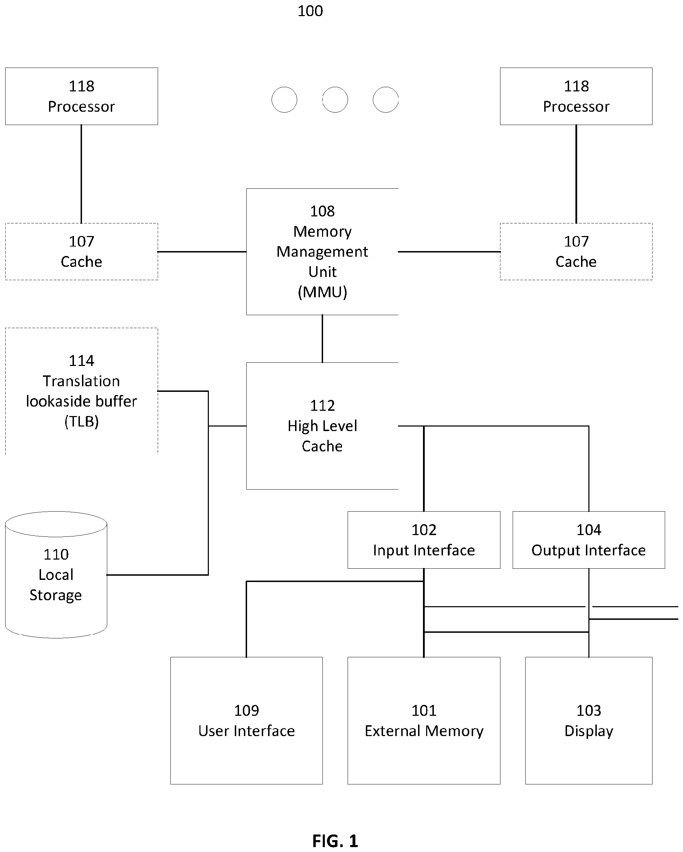

Reference is now made to FIG. 1, which is a schematic block diagram of an exemplary system with low overhead active mitigation of security vulnerabilities by memory tagging, according to some embodiments.

As shown in 100, a processing unit may comprise of a single or multiple processors 118 and several other computation components. As shown in 102 and 104 respectively, a system comprising a processing unit may implement input and output interfaces which may be implemented in software, firmware, or dedicated hardware (such as in ASIC or FPGA). The input interface 102 may receive instructions, configuration options and the likes from a user interface as shown in 109, and data, instructions and/or the like from an external memory, on a local or a remote system, as depicted in 101. The output interface shown in 104 may be connected to a display shown in 103, or produce output for clients on other systems, for example clients on the cloud. The system comprising a processing unit shown in 100, which may be responsible for hosting many applications, may use one or more processors, as depicted in 118. The processors may also be referred to as execution units, or cores, and one or more of the processors may be CISC or RISC cores, DSP processors, GPU cores, and/or the like. The local storage, as depicted in 110, may be comprise random memory, non-volatile memory, hard disks, backup tapes, and/or the like. Caching may be used in one or more locations along the path of the memory accesses. A processor, or a core, may have one or more caching levels, for example a cache shown on 107. The cache may be fully associative, way associative, or direct mapped, and may be characterized by various sizes and policies. A High Level Cache as depicted in 112 may be used for caching data from the local storage, or even remote data, which would otherwise be even slower to fetch. High level caches may comprise more complex logic, adapted for fully associative caching, prefetching by prediction, and the like. The cache may be further used to store instructions, configurations, and the like. The Translation lookaside buffer (TLB) shown in 114 may be used to convert address mapping from a context such of the processor's or the MMU's to the real system mapping, and/or vice versa.

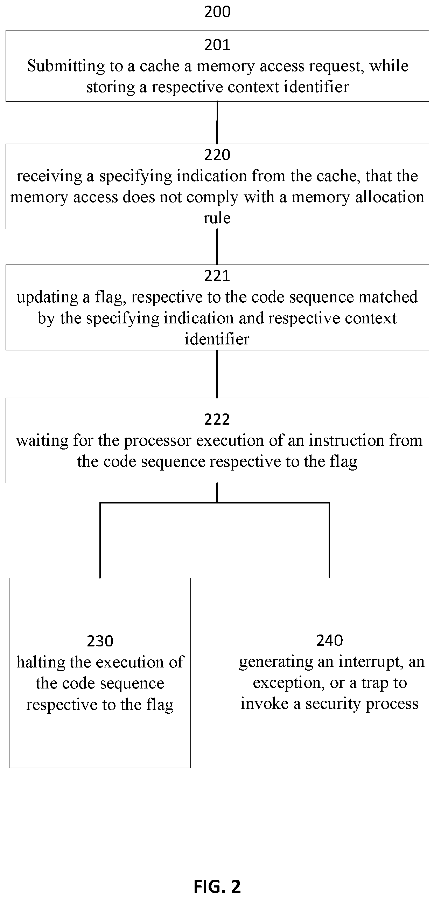

Referring now to FIG. 2, which is a flowchart schematically representing a flow of low overhead active mitigation of security vulnerabilities by memory tagging, according to some embodiments. The MMU 108 shown in FIG. 1, does execute process 200 for supporting out of order memory access for a plurality of client contexts. The process does contribute to the security and safety of all computer devices supporting out of order execution of a plurality of instruction from a plurality of contexts, threads, software layers, applications and/or the like. The process may be particularly beneficial for MMUs, caches, processing units, and the like, used in web servers, and subject to a variety of cyber threats.

The process 200 starts, as shown in 201, with submitting to a cache a memory access request, while storing a respective context identifier. The context identifier may be captured when the memory access request enters the MMU, and may be based on the program counter (PC) register, a function, optionally hashed, of the instruction code address, a privilege level such as the execution level, an application identifier, a thread identifier, and/or the like to identify the code sequence . The context identifier may be stored on registers, latches, on dedicated memory blocks, and/or the like. Substantially when the context identifier respective to the memory access request is captured and stored, the MMU may submit the memory access request to the cache. Since memory read requests retire only when the data returns from the cache, an offending context may be identified using registers existing in some prior arts. The process may be performed on memory write requests, however it may also be applied on other memory request, for example, read memory requests.

Followingly the cache calculates whether the pending memory access complies with the memory allocation rule comprises verifying that an address of the pending memory access is allocated to the code sequence respective to the context identifier.

The process 200 continues, as shown in 220, with receiving a specifying indication from the cache that the memory access does not comply with a memory allocation rule. That memory access may be referred to as offending.

A process submitting a memory request not compliant with a memory allocation rule may be referred to as an offending process. The violation of the memory allocation rule may be a result of one or more unintended bug or a deliberate malicious program, known as malware, for example spyware and ransomware. It should be noted that exploits such as Eternalblue are based on unintended bugs in operating system services. The memory allocation rules may be determined by a hardware, firmware, or a software process, for example, an operating system and/or a programmable application. The cache may comprise logic a block that verifies the memory allocation, or communicate with a different unit, functional block, or the like to execute the checking, enforcing the memory allocation rules. The specifying indication may be a negative acknowledge (NACK), received with a timing or an identifier the MMU may associate with a specific memory access.

The process 200 continues, as shown in 221, with updating a flag, respective to the code sequence matched by the specifying indication and respective context identifier.

Processors may have dedicated hardware to switch resources such as arithmetic units, execution units, memory access logic, and/or the like, between different threads, contexts, code sequences, routines, subroutines, and/or the like with little overhead. Memory access requests requiring a high level cache may be completed after several processor context switches, even when to local storage such as RAM or hard disk, let alone a remote access, are not required.

The process 200 may apply one or more flags, implemented as registers, latches, and/or the like, to indicate that a memory access did not comply with a memory allocation rule. The flag may be associated with the context identifier as stored on 201, however different methods may also indicate the offending process, which accounts for the memory access not complying with the memory allocation rule, for example, by marking a dirty bit associated with registers to be used when one of the processors switches to the offending process, i.e. the code sequence accounting for the memory access not complying with the memory allocation rule is marked as respective to the flag.

The process 200 continues, as shown in 222, with waiting for the processor execution of an instruction from the code sequence respective to the flag.

When the code sequence respective to the flag, or the offending process, is being executed while the specifying indication is received, either when no context switches occurred or when a processor is executing the code sequence again, no wait is needed, and the process may continue to the next stage immediately. However, when the code sequence respective to the flag is not executed by a processor, the process waits until a context switch is made to that code sequence.

The process 200 may continue, as shown in 230, with halting the execution of the code sequence respective to the flag. When a processor is executing the offending process, or the code sequence respective to the flag, it may be stopped by a signal such as interrupt, an error, or abort. The MMU may have direct access to the processor executing the offending process, or trigger an interrupt control unit to generate the event.

Moreover, optionally, as shown in 203, the process 240 may continue by generating an interrupt, an exception, or a trap to invoke a security process. In addition or alternatively to aborting the process, a firmware or a software handler may be invoked. For example, the processor may stop the execution of the offending process until a higher level process, for example an operating system service or a cyber security application is used to resolve the failure, or indicate the problem to a human operator, programmer, or the like, for example by using the display 103 depicted on FIG. 1. Additionally or alternatively, a debugger or an interface with a debug environment, independent or a part of an integrated development environment (IDE).

It should be noted that the process 200 is provided as an example, and variations to the process, for example by moving some of the features between hardware and firmware, programmable logic, and the like, are apparent to the person skilled in the art, and such variations should be construed as implementations of the disclosure.

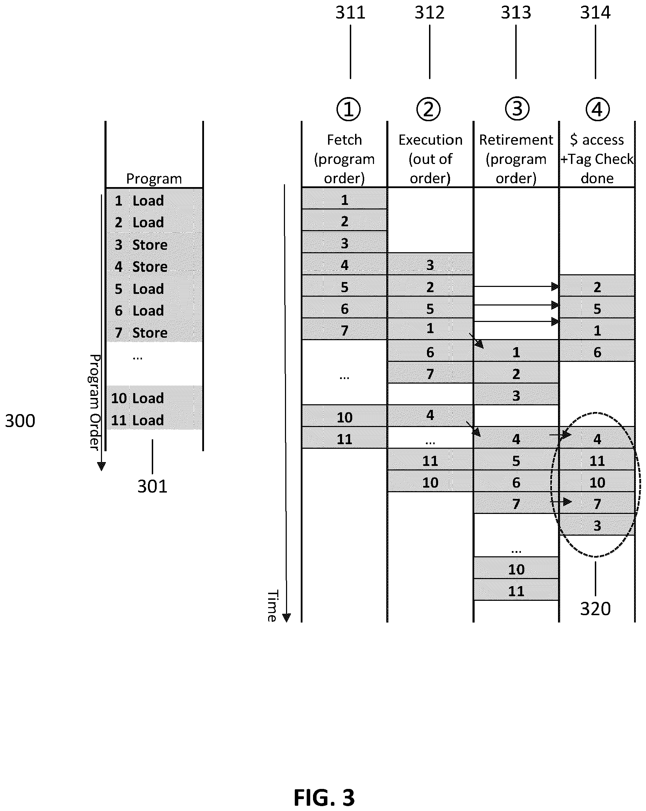

Reference is now made to FIG. 3, which is a pipeline illustration of an exemplary memory access sequence in a system with low overhead active mitigation of security vulnerabilities by memory tagging, according to some embodiments, according to prior art.

The illustration 300 depicts the code sequence in 301, and four stages of the memory management unit (MMU) pipeline: As shown in 311 or ① Fetch is done in program order. As shown in 312 or ② Execution is done out-of-order i.e. in data dependency order. As shown in 313 or ③ Retirement is done in-order, after execution is done. Moreover, as shown in 314 or ④ Load Cache access and Tag check done on execution. Store Cache access and tag check are done after retirement in weak order or out of order.

The code sequence shown in 301 depicts a sequential number and a type i.e. load or store of the instruction, and the matching row in the pipeline stages 311,312,313,314, indicate the number of the instruction being served at the time.

The numbers within the columns represent the index of the instruction being handled by the stage at the time, while the time axis is from top representing the earliest and bottom representing the latest.

The circle 320 was added to emphasize that a tag check for a latter instruction may be completed before the tag check of a former instruction from the same code sequence.

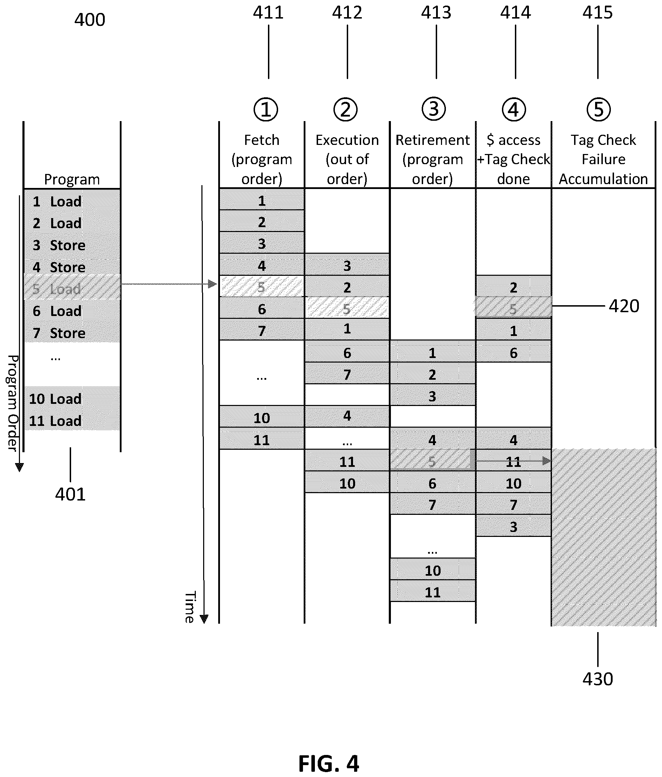

Reference is also made to FIG. 4, which is a pipeline illustration of an exemplary system with low overhead active mitigation of security vulnerabilities by memory tagging, according to prior art.

The illustration 400 depicts the code sequence in 401, four stages of the MMU pipeline, and a sticky bit for the tag check failure: As shown in 411 or ① Fetch is done in program order. As shown in 412 or ② Execution is done out-of-order (data dependency order). As shown in 413 or ③ Retirement is done in-order, after execution is done. As shown in 414 or ④ Load Cache access and Tag check done on execution. Store Cache access and tag check are done after retirement in weak order or out of order. As shown in 415 or ⑤ Tag Check Failures accumulated using a single bit per execution level (EL).

The offending memory access receives the Tag Check Failure as shown in 420, and the sticky bit is set, as shown in 430, when the offending memory access is retired.

According to this prior art, the program behavior is not affected by the Tag Check Failure. The Tag Check Failure does not cause a trap, an interrupt, or another mitigation method. A sticky bit is available for the OS to tell that a Tag Check Failure or a memory access not compliant with a memory allocation rule has occurred. The Tag Check Failure is detected after the store retires, without leaving tracing to the offending context.

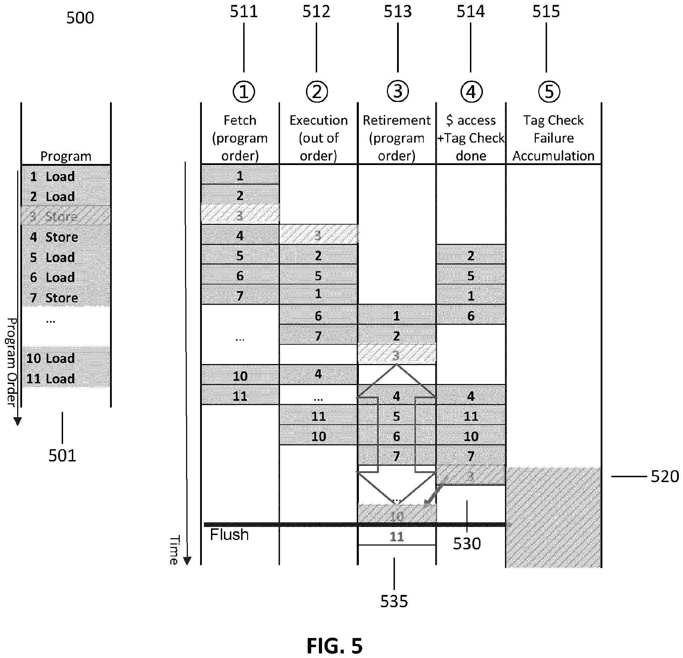

Referring is now to FIG. 5, which is a pipeline illustration of an exemplary system with low overhead active mitigation of security vulnerabilities by memory tagging, according to some embodiments.

The illustration 500 depicts the code sequence in 501, four stages of the MMU pipeline, and a sticky bit for the tag check failure: As shown in 511 or ① Fetch is done in program order. As shown in 512 or ② Execution is done out-of-order (data dependency order). As shown in 513 or ③ Retirement is done in-order, after execution is done. As shown in 514 or ④ Load Cache access and Tag check done on execution. Store Cache access and tag check are done after retirement in weak order or out of order. As shown in 515 or ⑤ Tag Check Failures accumulated using a single bit per context, privilege level, or execution level (EL).

The code sequence shown in 501 depicts a sequential number and a type i.e. load or store of the instruction, and the matching row in the pipeline stages 511,512,513,514, indicate the number of the instruction being served at the time. The same descending timeline applies to the sticky Tag Check Failures bit shown in 515.

The Tag Check Failure is a specifying indication from a cache, that a pending memory access does not comply with a memory allocation rule, and it may be pinned to the next memory access to retire at the same context, privilege level, or EL (3→10). This Tag Check Failure activates the sticky bit, also referred to as Tag Check Failures accumulated and shown in 515, thereby responded by updating a flag, as shown in 520. The sticky bit may be respective to a code sequence matched by the specifying indication and a respective context identifier. This mechanism generates an exception on the context accounting for the offending memory access as the following memory access from the same context retires, as shown in 530 thereby performing active mitigation, stopping the execution of the offending code sequence and all younger instructions from the context may be flushed. This accounts for halting the execution of the code sequence respective to the flag when it is executed by a processor.

This feature incurs no performance overhead. Optionally, this feature may circumvent the writing of the offending store (3) to the cache, by stalling it until the cache determines that the pending memory access complies with the memory allocation rule. Furthermore, when an additional memory access is directed to an address matching the address of the memory access it may be stalled until the tag check. Instructions younger than the next Load/Store(10) may be flushed, and the register AddTagCheckFailure may be on when the next instruction is a memory access (Load/Store) and the TagCheckError-Accumulated is in the same context, privilege level, or EL.

The sticky bit accumulation may be a part of the context (for the OS), thereby enabling the delivery of the exception to the correct context, privilege level, or EL.

The failure handling may still leave a vulnerability window, or a detection to exception window, due to instructions executed and retired after the offending store. While this window is too small to be exploited by most of the known methods, there are ways to further reduce the vulnerability window size. The vulnerability window includes the instructions younger than the offending store that retire before the offending store detection is signaled (instructions 4-9 in the example)
When the offending memory access is load, the transaction is not retired before the Tag Check Failure detection is signaled for loads, so it may not require addition of registers to deliver the exception to the offending context, privilege level, or EL. For stores the detection may be delayed, and thus be signaled on the next load/store to execute which the tag-check accumulation, or sticky bit is set, indicating an error of this type was detected. This bit is context switched and is per EL, so we can have the signaling be done to the correct EL. Signaling should be done once.

The offending store may be isolated, guaranteed not to affect the execution in the vulnerability window, and not written to the cache. The store to loads forwarding for the Offending store may be prevented by forcing the tag checking also on forwarding, thereby stalling the store to load forwarding until the cache determines that the pending memory access complies with the memory allocation rule.

At the exception point we may have a special architectural state, in which the cache is not updated, however registers of younger instructions are updated. This is a special case required for the isolation of the offending store for security.

Optionally, the features aimed at decreasing the vulnerability window size, are be either always on, or only on with accordance to one or more dedicated configuration bits. These options comprise changing the store dispatch to the cache to be in-order, i.e. stronger store order. This may have a small performance loss but can significantly reduce the vulnerability window, and may require modifications to the SCB or the post-commit pending stores buffer. Additionally, post-commit pending stores, e.g. store combining buffer, may be subject to aging limit, in order to reduce the time between store and checking. Limiting the ROB run-ahead in the case may also be applied, ad be configurable though the LOAM CSR.

Further, optionally, an asynchronous exception such as a detection interrupt may be triggered for stores when Tag Check Fail, before any next instruction. Since that asynchronous exception is an interrupt, it can still synchronized by a special barrier (like ESB in RAS). Alternatively, a trap may be generated to invoke a security process, The goal of these options is to provide a guarantee on the vulnerability windows size, i.e. the maximum number of instructions or stores that may be executed during the vulnerability window to allow effective software security analysis.

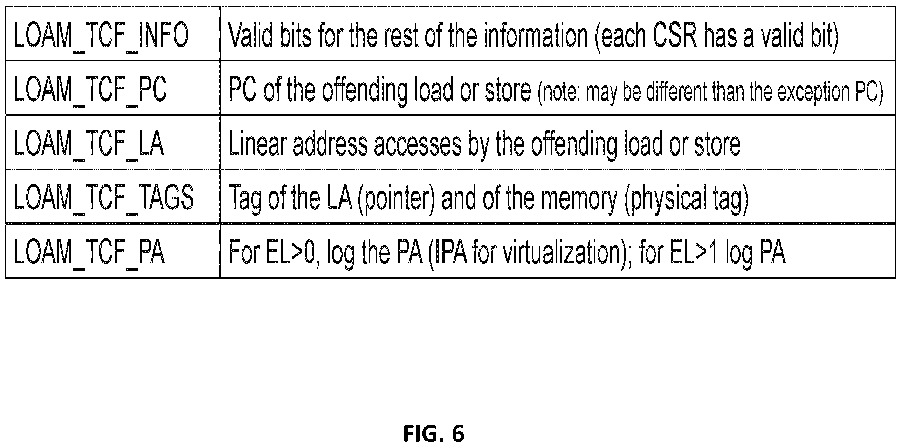

Referring is now to FIG. 6, which is a table of an exemplary register set for a system with low overhead active mitigation of security vulnerabilities by memory tagging, according to some embodiments.

The exemplary register set stores the linear address and program counter of the offending memory access, valid bits, tags for the associated pointer, physical addresses (PA), and intermediate physical addresses (IPA), used when address translation is done in a plurality of stages.

The exemplary register set may be used for enhancing information logging to speedup OSV/ISV debug, bucketing, and/or triaging. The register set further comprises CSRs to contain additional information when a Tag Check Failure (TCF) is detected.

It should be noted that since loads may not retire before completion of the cache fetching which may comprise verifying that a the memory access complies with the memory allocation rules, the information logging may be fairly straight forward for load memory accesses, however difficult to obtain for store memory accesses. Logging of requires being able to reconstruct properties for a store memory access when it is checked. At that point, the out of order (OOO) engine may maintain the a PA, need to keep the associated linear address bits for reconstruction/

The program counter (PC) of each store memory access may be attached to the store information. Some implementations may optimize the storing of PC in several ways such as deltas from branches, or storing the PC of the memory accesses in a stack-like structure.

The execution or privilege level, or a function thereof, may also be stored.

It should be noted that the table shown in FIG. 6 is provided as an example, and variations of the stored, for example by transforming, reordering, renaming, hashing or differential storage of pointers, are apparent to the person skilled in the art, and such variations should be construed as implementations of the disclosure.

The descriptions of the various embodiments have been presented for purposes of illustration, but are not intended to be exhaustive or limited to the embodiments disclosed.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment may include a plurality of "optional" features unless such features conflict.

Throughout this application, various embodiments may be presented in a range format. It should be understood that the description in range format is merely for convenience and brevity and should not be construed as an inflexible limitation on the scope of embodiments. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of embodiments, which are, for clarity, described in the context of separate embodiments, may also be provided in combination in a single embodiment. Conversely, various features of embodiments, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

## Claims

1. A processing unit adapted for out of order execution of a plurality of code sequences, comprising:
a processor (118);
a first plurality of registers, each storing at least a source address and a target address of a pending memory access to a cache (107, 112);
a second plurality of registers, each storing a respective context identifier of one of the plurality of code sequences requiring the pending memory access to the cache (107, 112);
wherein the processing unit is adapted for:
submitting (201), to the cache (107, 112), a first memory access request of a first code sequence (501) of the plurality of code sequences, and storing a context identifier corresponding to the first code sequence (501);
receiving (220) a specifying indication from the cache (107, 112), that a pending first memory access corresponding to the first memory access request does not comply with a memory allocation rule;
in response to the specifying indication, updating (221) a flag, respective to the first code sequence (501) matched by the specifying indication and respective context identifier; and
in response to the processor (118) execution of an instruction from the first code sequence (501) respective to the flag, halting (230) the execution of the first code sequence (501) respective to the flag.

2. The processing unit of claim 1, further comprising when the processor (118) executes the first code sequence (501) indicated by the flag, generating (240) at least one member of a group consisting of: an interrupt, an exception, and a trap to invoke a security process.

3. The processing unit of claim 1, wherein the first memory access is stalled until the cache (107, 112) determines that the pending first memory access complies with the memory allocation rule.

4. The processing unit of claim 3, further comprising when an additional memory access is directed to an address matching the address of the first memory access, stalling the additional memory access instruction.

5. The processing unit of claim 1, wherein the context identifier comprises a function of the process execution level, EL, of the first code sequence (501).

6. The processing unit of claim 1, further comprising stalling the store to load forwarding until the cache (107, 112) determines that the pending first memory access complies with the memory allocation rule.

7. The processing unit of claim 1, further comprising an aging limit on post-commit pending stores.

8. The processing unit of claim 1, further comprising a limit on a reorder buffer (ROB) run-ahead wherein the limit counts from a most recent store memory access that has been retired by the out of order execution and pending for the cache (107, 112) checking whether it complies with the memory allocation rule.

9. The processing unit of claim 1, wherein the cache (107, 112) calculates whether the pending first memory access complies with the memory allocation rule comprises verifying that the source address or the target address of the pending first memory access is allocated to the first code sequence (501) respective to the context identifier.

10. A method for mitigating security vulnerabilities in memory access instructions on a processing unit, comprising a processor (118), adapted for out of order execution of a plurality of code sequences, the method comprising:
submitting (201), to a cache (107, 112), a first memory access request of a first code sequence (501) of the plurality of code sequences, and storing a context identifier corresponding to the first code sequence (501);
receiving (220) a specifying indication from the cache (107, 112), that a pending first memory access corresponding to the first memory access request does not comply with a memory allocation rule, and
in response to the specifying indication, updating (221) a flag, respective to the first code sequence (501) matched by the specifying indication and a respective context identifier; and
in response to the processor (118) execution of an instruction from the first code sequence (501) respective to the flag, halting (230) the execution of the first code sequence (501) respective to the flag.

11. The method of claim 10, further comprising when the processor (118) executes the first code sequence (501) indicated by the flag, generating at least one member of a group consisting of: an interrupt, an exception, and a trap to invoke a security process

12. The method of claim 10, wherein the first memory access is stalled until the cache (107, 112) determines that the pending first memory access complies with the memory allocation rule.

13. The method of claim 12, further comprising when an additional memory access is directed to an address matching the address of the first memory access, stalling the additional memory access instruction.

14. The method of claim 10, wherein the context identifier comprises a function of the process execution level, EL, of the first code sequence (501).

15. The method of claim 10, further comprising stalling the store to load forwarding until the cache (107, 112) determines that the pending first memory access complies with the memory allocation rule.

16. The method of claim 10, further comprising an aging limit on post-commit pending stores.

17. The method of claim 10, further comprising a limit on a reorder buffer (ROB) run-ahead.

18. The method of claim 10, wherein the cache (107, 112) calculates whether the pending first memory access complies with the memory allocation rule comprises verifying that an address of the pending first memory access is allocated to the first code sequence (501) respective to the context identifier.

## Patentansprüche

1. Verarbeitungseinheit, die für Out-of-Order-Ausführung einer Vielzahl von Codesequenzen angepasst ist, umfassend:
einen Prozessor (118);
eine erste Vielzahl von Registern, von denen jedes mindestens eine Quelladresse und eine Zieladresse eines ausstehenden Speicherzugriffs auf einen Cache (107, 112) speichert;
eine zweite Vielzahl von Registern, von denen jedes eine jeweilige Kontextkennung einer der Vielzahl von Codesequenzen speichert, die den ausstehenden Speicherzugriff auf den Cache (107, 112) anfordern;
wobei die Verarbeitungseinheit zu Folgendem angepasst ist:
Übermitteln (201), an den Cache (107, 112), einer ersten Speicherzugriffsanforderung für eine erste Codesequenz (501) aus der Vielzahl von Codesequenzen und Speichern einer Kontextkennung, die der ersten Codesequenz (501) entspricht;
Empfangen (220) einer spezifizierenden Anzeige von dem Cache (107, 112), dass ein ausstehender erster Speicherzugriff, welcher der ersten Speicherzugriffsanforderung entspricht, eine Speicherzuweisungsregel nicht erfüllt;
als Reaktion auf die spezifizierende Anzeige, Aktualisieren (221) eines Flags in Bezug auf die erste Codesequenz (501), die mit der spezifizierenden Anzeige und der jeweiligen Kontextkennung übereinstimmt; und
als Reaktion auf Ausführen, durch den Prozessor (118), einer Anweisung aus der ersten Codesequenz (501) in Bezug auf das Flag, Anhalten (230) des Ausführens der ersten Codesequenz (501) in Bezug auf das Flag.

2. Verarbeitungseinheit nach Anspruch 1, ferner umfassend, wenn der Prozessor (118) die von dem Flag angezeigte erste Codesequenz (501) ausführt, Generieren (240) mindestens eines Mitglieds einer Gruppe bestehend aus: einer Unterbrechung, einer Ausnahme und einer Sperre, um einen Sicherheitsprozess zu aktivieren.

3. Verarbeitungseinheit nach Anspruch 1, wobei der erste Speicherzugriff ausgesetzt wird, bis der Cache (107, 112) bestimmt, dass der ausstehende erste Speicherzugriff die Speicherzuweisungsregel erfüllt.

4. Verarbeitungseinheit nach Anspruch 3, ferner umfassend, wenn ein zusätzlicher Speicherzugriff auf eine Adresse gerichtet ist, die mit der Adresse des ersten Speicherzugriffs übereinstimmt, Aussetzen des zusätzlichen Speicherzugriffsbefehls.

5. Verarbeitungseinheit nach Anspruch 1, wobei die Kontextkennung eine Funktion der Prozessausführungsebene (Prozess-EL) der ersten Codesequenz (501) umfasst.

6. Verarbeitungseinheit nach Anspruch 1, ferner umfassend Aussetzen des Weiterleitens vom Speichern zum Laden, bis der Cache (107, 112) bestimmt, dass der ausstehende erste Speicherzugriff die Speicherzuweisungsregel erfüllt.

7. Verarbeitungseinheit nach Anspruch 1, ferner umfassend eine Alterungsgrenze für nach dem Commit ausstehende Speicherungen.

8. Verarbeitungseinheit nach Anspruch 1, ferner umfassend eine Begrenzung für einen Reorder-Buffer-Vorlauf (ROB-Vorlauf), wobei die Begrenzung ab einem letzten Speicherzugriff zählt, der durch die Out-of-Order-Ausführung beendet wurde, und ausstehend ist, bis der Cache (107, 112) überprüft, ob er die Speicherzuweisungsregel erfüllt.

9. Verarbeitungseinheit nach Anspruch 1, wobei der Cache (107, 112) berechnet, ob der ausstehende erste Speicherzugriff die Speicherzuweisungsregel erfüllt, umfassend Überprüfen, dass die Quelladresse oder die Zieladresse des ausstehenden ersten Speicherzugriffs der ersten Codesequenz (501) in Bezug auf die Kontextkennung zugewiesen ist.

10. Verfahren zum Abschwächen von Sicherheitsschwachstellen bei Speicherzugriffsanweisungen auf einer Verarbeitungseinheit, umfassend einen Prozessor (118), der für Out-of-Order-Ausführung einer Vielzahl von Codesequenzen angepasst ist, wobei das Verfahren Folgendes umfasst:
Übermitteln (201), an einen Cache (107, 112), einer ersten Speicherzugriffsanforderung für eine erste Codesequenz (501) aus der Vielzahl von Codesequenzen und Speichern einer Kontextkennung, die der ersten Codesequenz (501) entspricht;
Empfangen (220) einer spezifizierenden Anzeige von dem Cache (107, 112), dass ein ausstehender erster Speicherzugriff, welcher der ersten Speicherzugriffsanforderung entspricht, eine Speicherzuweisungsregel nicht erfüllt, und
als Reaktion auf die spezifizierende Anzeige, Aktualisieren (221) eines Flags in Bezug auf die erste Codesequenz (501), die mit der spezifizierenden Anzeige und einer jeweiligen Kontextkennung übereinstimmt; und
als Reaktion auf Ausführen, durch den Prozessor (118), einer Anweisung aus der ersten Codesequenz (501) in Bezug auf das Flag, Anhalten (230) des Ausführens der ersten Codesequenz (501) in Bezug auf das Flag.

11. Verfahren nach Anspruch 10, ferner umfassend, wenn der Prozessor (118) die von dem Flag angezeigte erste Codesequenz (501) ausführt, Generieren mindestens eines Mitglieds einer Gruppe bestehend aus: einer Unterbrechung, einer Ausnahme und einer Sperre, um einen Sicherheitsprozess zu aktivieren.

12. Verfahren nach Anspruch 10, wobei der erste Speicherzugriff ausgesetzt wird, bis der Cache (107, 112) bestimmt, dass der ausstehende erste Speicherzugriff die Speicherzuweisungsregel erfüllt.

13. Verfahren nach Anspruch 12, ferner umfassend, wenn ein zusätzlicher Speicherzugriff auf eine Adresse gerichtet ist, die mit der Adresse des ersten Speicherzugriffs übereinstimmt, Aussetzen des zusätzlichen Speicherzugriffsbefehls.

14. Verfahren nach Anspruch 10, wobei die Kontextkennung eine Funktion der Prozessausführungsebene (Prozess-EL) der ersten Codesequenz (501) umfasst.

15. Verfahren nach Anspruch 10, ferner umfassend Aussetzen des Weiterleitens vom Speichern zum Laden, bis der Cache (107, 112) bestimmt, dass der ausstehende erste Speicherzugriff die Speicherzuweisungsregel erfüllt.

16. Verfahren nach Anspruch 10, ferner umfassend eine Alterungsgrenze für nach dem Commit ausstehende Speicherungen.

17. Verfahren nach Anspruch 10, ferner umfassend eine Begrenzung für einen Reorder-Buffer-Vorlauf (ROB-Vorlauf).

18. Verfahren nach Anspruch 10, wobei der Cache (107, 112) berechnet, ob der ausstehende erste Speicherzugriff die Speicherzuweisungsregel erfüllt, umfassend Überprüfen, dass eine Adresse des ausstehenden ersten Speicherzugriffs der ersten Codesequenz (501) in Bezug auf die Kontextkennung zugewiesen ist.

## Revendications

1. Unité de traitement adaptée à l'exécution dans le désordre d'une pluralité de séquences de codes, comprenant :
un processeur (118) ;
une première pluralité de registres, stockant chacun au moins une adresse source et une adresse cible d'un accès mémoire en attente sur un cache (107, 112) ;
une seconde pluralité de registres, stockant chacun un identifiant de contexte respectif d'une de la pluralité de séquences de codes nécessitant l'accès mémoire en attente au cache (107, 112) ;
dans laquelle l'unité de traitement est adaptée pour :
soumettre (201), au cache (107, 112), une première demande d'accès à la mémoire d'une première séquence de codes (501) de la pluralité de séquences de codes, et stocker un identifiant de contexte correspondant à la première séquence de codes (501) ;
recevoir (220) une indication de spécification du cache (107, 112), selon laquelle un premier accès mémoire en attente correspondant à la première demande d'accès mémoire n'est pas conforme à une règle d'allocation de mémoire ;
en réponse à l'indication de spécification, mettre à jour (221) un indicateur, respectif à la première séquence de codes (501) correspondant à l'indication de spécification et à l'identifiant de contexte respectif ; et
en réponse à l'exécution par le processeur (118) d'une instruction de la première séquence de codes (501) relative à l'indicateur, arrêter (230) l'exécution de la première séquence de codes (501) relative à l'indicateur.

2. Unité de traitement selon la revendication 1, comprenant en outre, lorsque le processeur (118) exécute la première séquence de codes (501) indiquée par l'indicateur, la génération (240) d'au moins un membre d'un groupe constitué : d'une interruption, d'une exception, et d'un déroutement pour invoquer un processus de sécurité.

3. Unité de traitement selon la revendication 1, dans laquelle le premier accès mémoire est bloqué jusqu'à ce que le cache (107, 112) détermine que le premier accès mémoire en attente est conforme à la règle d'allocation de mémoire.

4. Unité de traitement selon la revendication 3, comprenant en outre, lorsqu'un accès mémoire supplémentaire est dirigé vers une adresse correspondant à l'adresse du premier accès mémoire, le blocage de l'instruction d'accès mémoire supplémentaire.

5. Unité de traitement selon la revendication 1, dans laquelle l'identifiant de contexte comprend une fonction du niveau d'exécution du processus, EL, de la première séquence de codes (501) .

6. Unité de traitement selon la revendication 1, comprenant en outre le blocage du dispositif de stockage pour transférer le chargement jusqu'à ce que le cache (107, 112) détermine que le premier accès mémoire en attente est conforme à la règle d'allocation de mémoire.

7. Unité de traitement selon la revendication 1, comprenant en outre une limite de vieillissement sur les dispositifs de stockage en attente de post-validation.

8. Unité de traitement selon la revendication 1, comprenant en outre une limite sur une exécution anticipée du tampon de réorganisation (ROB), dans laquelle la limite compte à partir d'un accès à la mémoire de stockage le plus récent qui a été retiré par l'exécution dans le désordre et en attente pour le cache (107, 112) vérifiant s'il est conforme à la règle d'allocation mémoire.

9. Unité de traitement selon la revendication 1, dans lequel le cache (107, 112) calcule si le premier accès mémoire en attente est conforme à la règle d'allocation de mémoire et comprend la vérification que l'adresse source ou l'adresse cible du premier accès mémoire en attente est allouée à la première séquence de codes (501) relative à l'identifiant de contexte.

10. Procédé pour atténuer les vulnérabilités de sécurité dans les instructions d'accès à la mémoire sur une unité de traitement, comprenant un processeur (118), adapté pour l'exécution dans le désordre d'une pluralité de séquences de codes, le procédé comprenant :
la soumission (201), au cache (107, 112), d'une première demande d'accès à la mémoire d'une première séquence de codes (501) de la pluralité de séquences de codes, et le stockage d'un identifiant de contexte correspondant à la première séquence de codes (501) ;
la réception (220) d'une indication de spécification du cache (107, 112), selon laquelle un premier accès mémoire en attente correspondant à la première demande d'accès mémoire n'est pas conforme à une règle d'allocation de mémoire, et
en réponse à l'indication de spécification, la mise à jour (221) d'un indicateur, relatif à la première séquence de codes (501) correspondant à l'indication de spécification et à l'identifiant de contexte respectif ; et
en réponse à l'exécution par le processeur (118) d'une instruction de la première séquence de codes (501) relative à l'indicateur, l'arrêt (230) de l'exécution de la première séquence de codes (501) relative à l'indicateur.

11. Procédé selon la revendication 10, comprenant en outre, lorsque le processeur (118) exécute la première séquence de codes (501) indiquée par l'indicateur, la génération d'au moins un membre d'un groupe constitué : d'une interruption, d'une exception, et d'un déroutement pour invoquer un processus de sécurité.

12. Procédé selon la revendication 10, dans lequel le premier accès mémoire est bloqué jusqu'à ce que le cache (107, 112) détermine que le premier accès mémoire en attente est conforme à la règle d'allocation de mémoire.

13. Procédé selon la revendication 12, comprenant en outre, lorsqu'un accès mémoire supplémentaire est dirigé vers une adresse correspondant à l'adresse du premier accès mémoire, le blocage de l'instruction d'accès mémoire supplémentaire.

14. Procédé selon la revendication 10, dans lequel l'identifiant de contexte comprend une fonction du niveau d'exécution du processus, EL, de la première séquence de codes (501) .

15. Procédé selon la revendication 10, comprenant en outre le blocage du dispositif de stockage pour transférer le chargement jusqu'à ce que le cache (107, 112) détermine que le premier accès mémoire en attente est conforme à la règle d'allocation de mémoire.

16. Procédé selon la revendication 10, comprenant en outre une limite de vieillissement sur les dispositifs de stockage en attente de post-validation.

17. Procédé selon la revendication 10, comprenant en outre une limite d'exécution anticipée du tampon de réorganisation (ROB).

18. Procédé selon la revendication 10, dans lequel le cache (107, 112) calcule si le premier accès mémoire en attente est conforme à la règle d'allocation de mémoire et comprend la vérification qu'une adresse du premier accès mémoire en attente est attribuée à la première séquence de codes (501) relative à l'identifiant de contexte.
